# EUROPEAN PATENT SPECIFICATION

(11) **EP 1 152 220 B1**
(45) Date of publication and mention of the grant of the patent: **09.07.2008**
(21) Application number: 00201620.2
(22) Date of filing: 04.05.2000
(51) Int. Cl.: G01C 21/34

(54) **Navigation route planning system**
Navigationsroutenplanungssystem
Système de planification de route pour véhicule

(43) Date of publication of application: 07.11.2001
(73) Proprietor: Continental Automotive GmbH, 30165 Hannover (DE)
(72) Inventor: Klein, Bernard, 35614 Asslar (DE)

(56) References cited:
- EP-A- 0 785 519
- EP-A- 0 788 067
- EP-A- 0 795 835
- FR-A- 2 762 906

## Description

The invention relates to a navigation route planning system provided with various interlinked facilities, including a user I/O facility, a route planning facility, a position determination facility, and a destination and institutional table facility. The route planning facility is arranged for under control of a set of interval point requests received from a user, one or more timing indications each associated to a respective interval point request, and furthermore dynamic traffic condition information received from an overall notification system.

US 4,951,212 discloses a navigation route planning system in which a user may enter a request for selecting a destination that is categorized according to its purpose of use, such as a supermarket. The system will then select the most suitable supermarket and guide the driver in accordance with the selection. The present inventor has recognized that this prior art organization is essentially static, and would not be able to cope in a dynamic manner with changes in the traffic conditions.

EP 0 785 519 A1 discloses an itinerary preparing system capable of easily preparing a complete travel plan that efficiently incorporates desired resetting places. A user inputs from a terminal an intended travel time of a trip together with visiting place information. Based on the visiting place information a calculation section for calculating an expected consumption time in an information center calculates the expected consumption time for reaching the visiting place or an expected length of stay there at. An access/shortage determining section compares the intended travel time with a total expected consumption time of the trip, and adjusts the intended travel time or the total consumption time based on the comparison result. Consequently, an itinerary preparing section makes a travel plan and transmits it to the terminal via an I/O section. When the received itinerary is approved at the terminal, the information center revises the itinerary by filing in free time of the itinerary. Then, the revised itinerary is sent back to the terminal and an approved final itinerary is provided.

EP 0 795 835 A1 discloses a system which automatically makes a travel plan by using a vehicle or a portable terminal. The system can prepare a travel plan in which a concrete destination and a route are specified when rough positional and temporary conditions are inputted. The objective area and a schedule inputted through the terminal are transmitted to an information center. At the information center, a basic frame of the travel meeting the received conditions is prepared. For a day trip, an example of the basic frame is "departure-walk-lunch-amusement-park-night-fuel-return". After the basic frame is prepared, concrete facilities meeting the actions are specified by making access to the data base. The specified facilities are inputted through the basic frame, and thus a concrete plan is completed. The completed plan is supplied to the terminal and displayed on a display to the persons who wants to travel. The completed plan is further supplied to a navigation system and the system guides the person in accordance with the plan.

The invention also relates to a method for operating a route planning system as described above.

It is an object of the present invention to provide a route planning system that allows to enter a set of interval points each provided with associated timing indications and which system then will generate a route and an associated timing schedule that accommodate to the set of interval points inclusive of coping in a dynamic manner with changes in traffic conditions.

The navigation route planning system of a vehicle is provided with various interlinked facilities, including a user I/O facility, a route planning facility, a position determination facility, a navigational computer subsystem to figure out a route to be taken and a destination and institutional table facility, wherein said route planning facility is arranged for under control of a set of interval point requests received from a user, one or more timing indications each associated to a respective interval point request, and furthermore traffic information received from an overall notification system, generating a route listing for a route to be travelled in accordance with the interval points, associated timing indications and traffic information, characterized in that
- the traffic information is dynamic traffic information which is communicated to the vehicle
- said dynamic traffic information is communicated to the navigational computer subsystem and the route planning facility (24) for influencing in a dynamic manner the planning of the route to be taken.

Further user interface improvements are obtained in preferred embodiments of the invention, characterized by the overall notification system in said putting forward prioritizing a proposal that maintains an earlier and actually effective traveling schedule and/or characterized in that a failure to maintain said effective schedule triggers an overall replanning of the route instead of a partial adaptation.

These and further aspects and advantages of the invention will be discussed more in detail hereinafter with reference to the disclosure of preferred embodiments, and in particular with reference to the appended Figures that show:
Figure 1 shows an overall diagram of a system according to the invention;
Figure 2 is an input example representing a user's requirements;
Figure 3 is a first result output presented by the system; Figure 4 is a second result output after a planning change caused by a traffic accident;
Figure 5 demonstrates a few further dynamic effects;
Figure 6 is an applicable flow chart.

Amongst other things, it is an object of the present invention to support the user in planning a journey and to update the planning in a dynamic manner as depending on actual traffic conditions. A prerequisite for using the system is the availability of a navigation system that includes the supporting of the travel planning, as recited in EP-A-1106967, which provides for inputting spatial targets as well as temporal targets for generating interval points in a dynamic manner. The present invention furthermore provides to allow receiving information regarding traffic conditions, and in particular traffic problems, for on the basis thereon, informing the user on the problems themselves, as well as on possible detours and other changes in the route planning.

After the user has inputted all requirements for the travel, the system will calculate an optimum sequence for going to the various destinations. The sequence may at any instant be amended by the user. Now in particular, the setting of the route should take into account actual traffic conditions. Because these may in general undergo continual changes, the route planning is being adapted in a dynamic manner. To keep this adapting transparent to the user person, the system will notify the user of such necessary or useful changes that will have occurred on the ground of the actual traffic conditions. The user may ultimately decide on the changing or maintaining of the route.

The user will not only get an advice on a detour preferred by the system, but will also get the possibility to adapt the overall planning of the route. The changes may pertain to the temporal sequence or on the spatial configuration of certain destinations. Various examples are as follows:
- A particular traffic problem may negatively influence the expected duration of travel. In such case, various times, such as time of departure and time of stay may have to be corrected, if destination, time of arrival, and activity have been specified. An "activity" may for example be a legally prescribed rest interval, or a meal.
- A particular traffic problem may render a different sequence in time and space among the destinations preferable over the original one.
- When a particular activity, such as lunch, had been used to therefrom derive a destination location, then the occurring traffic problem may lead to assign this activity to a different destination. Also the instant assigned to this activity may be amended, such as through having lunch earlier, or through waiting for the adverse condition to be solved.

The above examples pertain to the dynamic beginning of a traffic problem. It is likewise possible that a particular traffic problem will be solved in the course of time, or even that its nature or location will be changed. For example, a traffic jam due to the travel of an exceptional vehicle will probably move together with that particular vehicle. In such situations, the facilities provided by the invention will remain likewise applicable.

Now, the amendments generated by the system may be considered by the user as mere proposals, that may be accepted or rejected. In particular, to accommodate to the user's own wishes regarding the contination of the journey, the system may indicate the grounds leading to the proposals for change. This indication may be done in text, in speech, or through representing the situation on a map of a useful scale and area. The proposed amendments may be shown on the map and/or in tabular form.

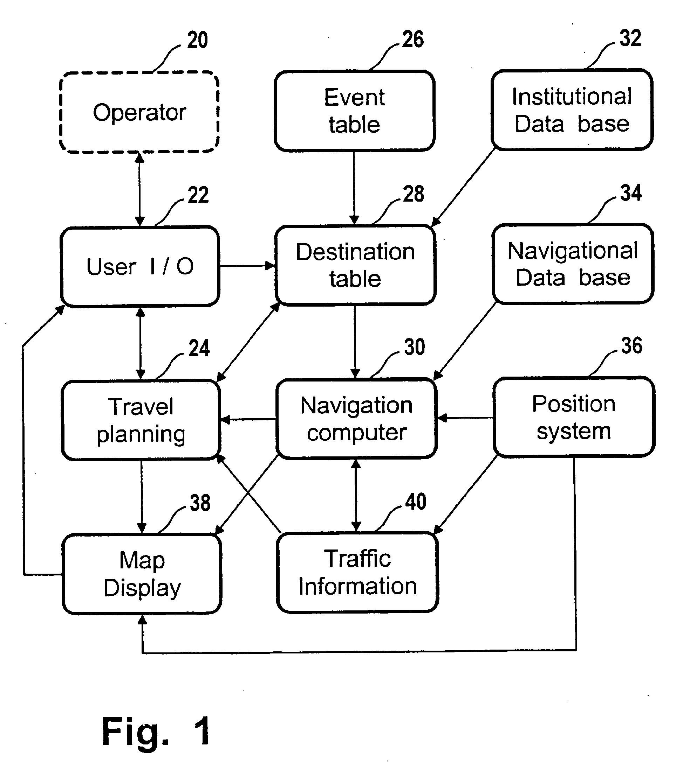

Figure 1 shows an overall diagram of a system according to the invention, that by way of example has eleven subsystems, as follows. Block 20 symbolizes a user person who wants to be guided by the system. The user interfaces bidirectionally to the system's I/O 22 that may have various hardware and software facilities such as keyboard, mouse, speech, other audio, and display of text and/or maps. Block 32 represents an institutional data base that may store various entries, such as representing hotels, restaurants or other facilities, together with associated data such as location, business hours, and actual services present at those facilities. Block 34 represents a navigational data base that may store a road network, together with physical distances or travel time distances between representative points, road classification, and others. Block 36 represents a position system that detects an actual position of the vehicle, such as through a well known GPS system. Block 26 represents an event table, such as a road block or jam situation that has been communicated by a higher level authority such as as a Radio Data System, and which event may cause a certain destination to be no longer reacheable, or only in a delayed manner, or which may necessitate the vehicle to take a detour.

Block 28 represents a destination table that contains the destinations and associated timing indications, such as entered by the user through block 22, and subject to information from the travel planning in block 24, the institutional data base in block 32, and the event table in block 26. Block 30 represents a navigational computer that is fed with the Destination Table from block 28, with the navigational data base from block 34, and with the position from block 36. From these informations it can figure out a route to be taken, which route may contain various interval points and timing indications associated to the various interval points. Block 24 represents the travel planning that is fed by the information from the navigational computer 30, and which block 24 furthermore bidirectionally interfaces to the destination table in block 28, and to the user I/O in block 22. The travel planning will update the destination table if it fails to find a correct solution for attaining all interval points. It will signal to the user what route is to be taken, and it will signal the above failure to allow the user to modify the set of interval points and/or associated timing indications.

Block 40 represents the information of dynamic travel conditions that may be received in the same manner as the information of event table 26, such as through RDS/TMC or mobile radio, but that according to the present invention is used in a different and dynamic manner. The information is activated through an actual position received from subsystem 36, and further through the planned travel information received from subsystem 30. The activated information is communicated to navigational computer subsystem 30 and to travel planning subsystem 24, for influencing in a dynamic manner the planning of the route to be taken, subject to a dialog with the user person. Map display subsystem 38 receives information from block 24 regarding what route has been planned, from block 36 regarding what the actual position of the vehicle is, and from navigational computer subsystem 30 information regarding what route(s) will be feasible as alternative; the latter information is also fed back as activating information to subsystem 40.

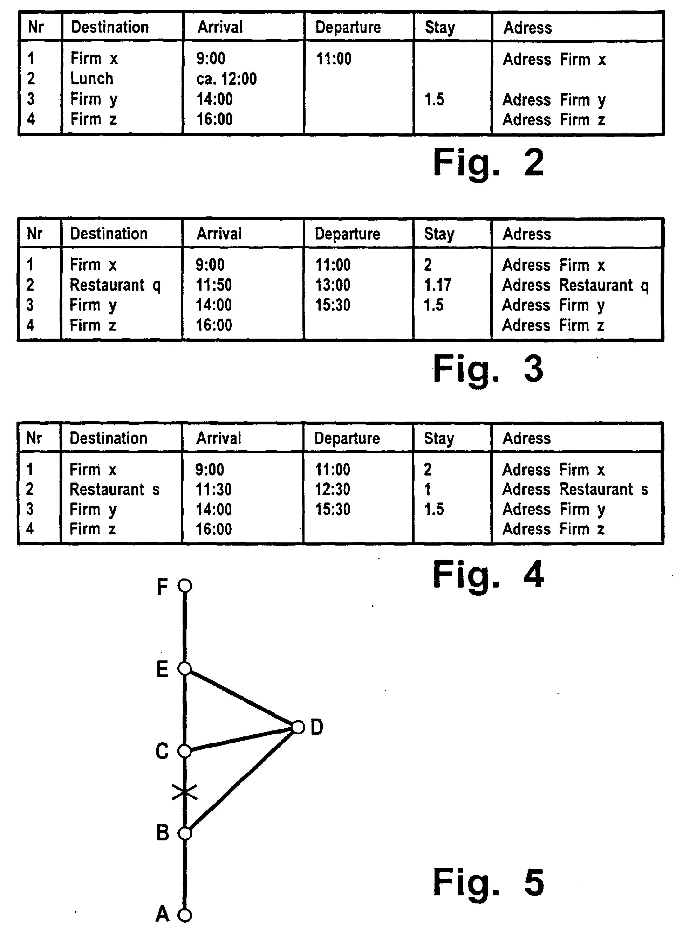

Figure 2 is an input example representing a user's requirements. As shown, the user wants to visits three firms x, y, z, each with its address provided, and also wants to have lunch at about 12 o'clock. Furthermore, the interval at firm x has its arrival time and departure time fully specified, the interval at firm y has its arrival time and its Stay length specified, and the interval at firm z has only its arrival time specified. Various items of the above may have been inputted into the system by speech from the user person, either before the commencement of the actual travelling, or even during the actual travel.

Figure 3 is the result output presented by the system as meeting the user's requirements listed in Figure 2. First, the intervals at the three firms x, y and z have their arrival, departure and stay times fully specified as far as feasible. Furthermore, the system has sought for a suitable restaurant that would best meet the requirements of an arrival time near 12 o'clock, and a stay time that would be sufficient for lunch. Using the institutional data base 32 and navigational data base 34 of Figure 1, it has come up with restaurant q at an address that would give one hour's and ten minutes' time, which was considered long enough. Also, the associated departure time has been presented. In other cases, the system would signal that another sequence among the three firms to be visited would be necessary. For example, it could be necessary to have lunch between the visits to firms y and z, respectively, if the available restaurant was more down the road, or the system could signal that the requirements could not be met. In such case, the user could indicate another sequence of the visits, or could even relinquish the requirement for a specified sequence, and leave it to be determined by the system itself. Still another case could occur, where the system would for example find that the three firms were too far from each other, given the various required Stay lengths, to be visited on a single day.

Figure 4 is the changed output presented by the system as the result of an accident or other traffic problem on the interval between firms x and y while still meeting the user's requirements. It has been found necessary or advisable to change to another lunch address, to advance to start of lunch, and to shorten the interval allowable for lunch. For better information, the changes are printed fat, and in practice may be shown in a conspicuous color or other format, such as blinking or enlarged, and possibly through supportive or explicative speech. The user may agree with the amendments or not. In the latter case, the user may, for example, amend the arrival time at firm y, advance the departure time at firm x, or take such other measures as considered fit for the particular purpose. In this particular situation, the time interval between lunch and the planned arrival at destination y is increased; this allows to take a detour if the traffic impediment will still exist after lunch.

Figure 5 demonstrates a few further dynamic effects of the present invention. For simplicity, only the lengths of the intervals are taken into account. If the route should call at all destinations A through F, the shortest path is sequentially along A, B, C, D, E, F. If there is a traffic block between B and C, the shortest route is sequentially along A, B, D, C, E, F. However, the user may find it be necessary to visit destination C before destination D. This will clearly necessitate a longer route, which the user may input into the system. This may again influence the traveling schedule.

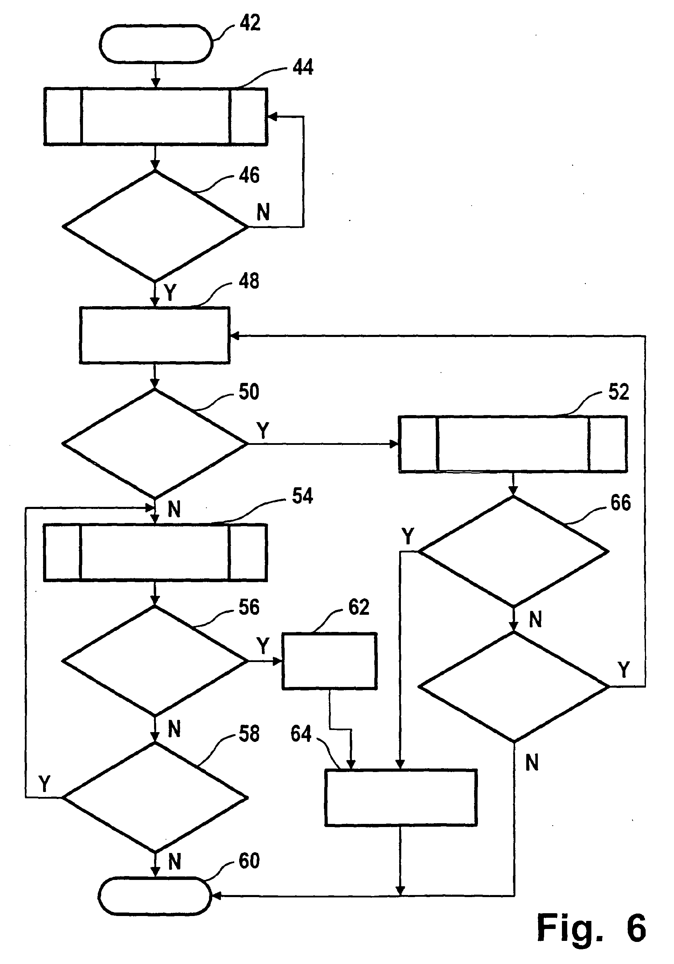

Figure 6 is an applicable flow chart of the operation of the route planning system according to the invention. An important aspect of the embodiment is, that the system will search first for alternatives that have minimum influence on the actual travel planning. If it proves impossible to maintain the actual planning, the system will undertake to change the planning overall. The other approach, that is to only amend the departure and/or arrival times, will generally only diminish the times of stay. while extending the time spent on the road. Such procedure might however bring the user in a stressed situation, wherein it is undertaken to make good for the time lost in the traffic, and might cause further delay or even accidents. In contradistinction, the preferred embodiment of the invention undertakes to implement one or more of the following:
- optimize the sequence wherein the various destinations will be reached;
- to shift an activity so that the user would benefit by spending time for other purposes instead of standing idle in an extended traffic jam;
- having an activity at such location that is not involved in the traffic problem at all.

Now in particular, in block 42 the system is started, the necessary hardware and software facilities are assigned and the original route is planned. In block 44, the system receives the traffic notification in question. In block 46, the system detects whether the notification does influence the route planning, for example by checking the instant that the vehicle will pass a particular location against the interval during which the obstruction or other adverse condition is known or expected to persist. If negative (no influence), the system goes back to the waiting loop of block 44. If positive, the system first undertakes in block 48 to plan a detour. Next, in block 50 the system checks whether along the detour the original timing can still be maintained. If yes, the system in block 52 proposes the detour to the user. If the detour is accepted by the user indeed in block 66 (Y), the original route in block 64 is replaced by the new route, and the procedure is terminated in block 60. In fact, the system could as well go again to the waiting loop of block 44.

If on the other hand, the user rejects the proposed route in block 66, the system checks in block 68 whether other possibilities are present. If no, the system goes to block 60, while signalling to the user a failure to find such other schedule. The latter may then still accept, or change the overall requirements or, for example, report to a superintendent authority that such failure has occurred. If in block 68 still further possibilities exist (Y), the system goes back to block 50.

If in block 50 the original schedule cannot be maintained (N), the system in block 54 undertakes to plan a new schedule. The user then may allow or reject this schedule in blocks 56, 58, just like in blocks 66, 68, and eventually, either the planning is corrected in block 62, or the system exits to block 60 when no further possibilities are present.

During the actual travel, it remains possible to amend the schedule. This amending may be effected by the user person, in the form of speech, keystrokes or otherwise, and may pertain to the inserting or deleting of interval points, the amending of wanted stay times, and various other. Also, the guiding of the vehicle may be changed in a dynamic manner, such as under the influence of external events or situations, such as traffic jams or rainstorms, or rather the discontinuance of such events or adverse situations. Such aspects may be dynamically communicated to the vehicle by known systems such as **R**adio **D**ata **S**ystem-**TMC**, **M**obile**R**adio, and others. This arrival of new information may require the driver to maintain to some degree a continuing and dynamic dialog with the overall system. Such could require the driver to change plans, because the dynamic situation may have any type of influence on the planned route.

The person skilled in the art of route planning will recognize further policies to be followed within the ambit of the present invention, the scope of which has justfully been determined by the appended claims hereinafter.

## Claims

1. A navigation route planning system of a vehicle provided with various interlinked facilities, including a user I/O facility (22), a route planning facility (24), a position determination facility (36), a navigational computer subsystem (30) to figure out a route to be taken and a destination and institutional table (28, 32) facility,
wherein said route planning facility (24) is arranged for under control of a set of interval point requests received from a user, one or more timing indications each associated to a respective interval point request, and furthermore traffic information received from an overall notification system, generating a route listing for a route to be travelled in accordance with the interval points, associated timing indications and traffic information,
**characterized in that**
- the traffic information is dynamic traffic information (40) which is communicated to the vehicle
- said dynamic traffic information (40) is communicated to the navigational computer subsystem (30) and the route planning facility (24) for influencing in a dynamic manner the planning of the route to be taken.

2. A navigation system as claimed in claim 1, **characterized by** said overall notification system putting forward one or more proposals for acceptance or rejection by a user.

3. A navigation system as claimed in claim 2, **characterized by** the overall notification system in said putting forward prioritizing a proposal that maintains an earlier and actually effective traveling schedule.

4. A navigation system as claimed in claim 3,
**characterized in that** a failure to maintain said effective schedule triggers an overall replanning of the route instead of a partial adaptation.

5. A navigation system as claimed in claim 1, **characterized by** reject recognition means for after said generating detecting a user reject or amendment signal, and reactivating said route planning facility for thereupon generating an amended route listing.

6. A navigation system as claimed in claim 1, **characterized by** failure signalization means for under control of a failure with respect to accommodating said route, signalizing a failure signal and enabling the user (20) to enter an amendment.

7. A navigation system as claimed in claim 1, **characterized by** a speech reception facility for allowing a user person to enter amendment and/or reject signals in the form of speech.

8. A navigation system as claimed in claim 7, **characterized by** further having receiving means for receiving external condition signalizations from an overall long-range signalization or broadcast system, such as RDS-TMC or mobile radio.

9. A method for operating a navigation route planning system as claimed in claim 1, that is provided with various interlinked facilities, including a user I/O facility (22), a route planning facility (24), a position determination facility (36), a navigational computer subsystem (30) to figure out a route to be taken and a destination and institutional table (28, 32) facility, wherein said method comprises the steps of user-entering into the system a set of interval point requests received from a user (20) and one or more timing indications each associated to a respective interval point request, and furthermore detecting traffic information received from an overall notification system, and user-inducing said system to generate a route listing for a route to be traveled in accordance with the interval points, associated timing indications and traffic condition information,
**characterized in that**
- the traffic information is dynamic traffic information (40) which is communicated to the vehicle
- said dynamic traffic information (40) is communicated to the navigational computer subsystem (30) and the route planning facility (24) for influencing in a dynamic manner the planning of the route to be taken.

## Patentansprüche

1. Navigationsroutenplanungssystem eines Fahrzeugs, das mit verschiedenen miteinander verknüpften Einrichtungen ausgestattet ist, darunter eine Benutzer-E/A-Einrichtung (22), eine Routenplanungseinrichtung (24), eine Positionsbestimmungs-einrichtung (36), ein Navigationscomputer-Subsystem (30) zum Ausarbeiten einer zu nehmenden Route und eine Einrichtung einer Ziel- und Institutionstabelle (28, 32), wobei die Routenplanungseinrichtung (24) dafür ausgelegt ist, unter der Kontrolle einer Menge von von einem Benutzer erhaltenen Pausenpunktanforderungen, einer oder mehrerer Zeitsteuerungsangaben, die jeweils mit einer jeweiligen Pausenpunktanforderung assoziiert sind, und ferner von aus einem Gesamtbenachrichtigungssystem erhaltenen Verkehrsinformationen eine Routenauflistung für eine zu fahrende Route gemäß den Pausenpunkten, assoziierten Zeitsteuerungsangaben und Verkehrsinformationen zu erzeugen,
**dadurch gekennzeichnet, daß**
- die Verkehrsinformationen dynamische Verkehrsinformationen (40) sind, die zu dem Fahrzeug übermittelt werden
- die dynamischen Verkehrsinformationen (40) zu dem Navigationscomputer-Subsystem (30) und der Routenplanungseinrichtung (24) übermittelt werden, um die Planung der zu nehmenden Route auf dynamische Weise zu beeinflussen.

2. Navigationssystem nach Anspruch 1, **dadurch gekennzeichnet, daß** das Gesamtbenachrichtigungssystem einen oder mehrere Vorschläge darlegt, die von einem Benutzer angenommen oder zurückgewiesen werden können.

3. Navigationssystem nach Anspruch 2, **dadurch gekennzeichnet, daß** das Gesamtbenachrichtigungssystem bei dem Darlegen einen Vorschlag priorisiert, der eine frührere und tatsächlich effektive Reiseablaufplanung aufrechterhält.

4. Navigationssystem nach Anspruch 3, **dadurch gekennzeichnet, daß** ein Nichtinderlagesein, die effektive Ablaufplanung aufrechtzuerhalten, eine Gesamt-Neuplanung der Route anstelle einer teilweisen Anpassung auslöst.

5. Navigationssystem nach Anspruch 1, **gekennzeichnet durch** Zurückweisungserkennungsmittel zum Detektieren eines Benutzerzurückweisungs- oder Abänderungssignals nach dem Erzeugen und zum Neuaktivieren der Routenplanungseinrichtung zum Erzeugen einer abgeänderten Routenauflistung daraufhin.

6. Navigationssystem nach Anspruch 1, **gekennzeichnet durch** Mißerfolgssignalisierungsmittel zum Signalisieren eines Mißerfolgssignals und zum Befähigen des Benutzers (20), eine Abänderung einzugeben, unter der Kontrolle eines Mißerfolgs mit Bezug auf die Realisierung der Route.

7. Navigationssystem nach Anspruch 1, **gekennzeichnet durch** eine Sprachempfangseinrichtung zur Befähigung einer Benutzerperson, Abänderungs- und/oder Zurückweisungssignale in Form von Sprache einzugeben.

8. Navigationssystem nach Anspruch 7, ferner **gekennzeichnet durch** Empfangsmittel zum Empfangen von externen Bedingungssignalisierungen von einem gesamten Signalisierungs-oder Ausstrahlungssystem mit großer Reichweite, wie zum Beispiel RDS-TMC oder Mobilfunk.

9. Verfahren zum Betrieb eines Navigationsroutenplanungssystems nach Anspruch 1, das mit verschiedenen miteinander verknüpften Einrichtungen ausgestattet ist, darunter eine Benutzer-E/A-Einrichtung (22), eine Routenplanungseinrichtung (24), eine Positionsbestimmungseinrichtung (36), ein Navigationscomputer-Subsystem (30) zum Ausarbeiten einer zu nehmenden Route und eine Einrichtung einer Ziel- und Institutionstabelle (28, 32), wobei das Verfahren die folgenden Schritte umfaßt: Benutzereingabe einer Menge von von einem Benutzer (20) erhaltenen Pausenpunktanforderungen und einer oder mehrerer Zeitsteuerungsangaben, die jeweils mit einer jeweiligen Pausenpunktanforderung assoziiert sind, in das System und ferner Detektieren von aus einem Gesamtbenachrichtigungssystem erhaltenen Verkehrsinformationen und Benutzerveranlassen des Systems, eine Routenauflistung für eine zu fahrende Route gemäß den Pausenpunkten, assoziierten Zeitsteuerungsangaben und Verkehrsbedingungsinformationen zu erzeugen, **dadurch gekennzeichnet, daß**
- die Verkehrsinformationen dynamische Verkehrsinformationen (40) sind, die zu dem Fahrzeug übermittelt werden
- die dynamischen Verkehrsinformationen (40) zu dem Navigationscomputer-Subsystem (30) und der Routenplanungseinrichtung (24) übermittelt werden, um die Planung der zu nehmenden Route auf dynamische Weise zu beeinflussen.

## Revendications

1. Système de planification d'itinéraire de navigation d'un véhicule muni de diverses fonctionnalités interconnectées, comprenant une fonctionnalité I/O d'utilisateur (22), une fonctionnalité de planification d'itinéraire (24), une fonctionnalité de détermination de position (36), un sous-système informatique de navigation (30) pour calculer un itinéraire à prendre et une fonctionnalité de tableau des destinations et des établissements (28, 32), dans lequel ladite fonctionnalité de planification d'itinéraire (24) est configurée pour produire, sous la commande d'un jeu de demandes de points d'intervalle reçues d'un utilisateur, d'une ou plusieurs indications d'horaire associées chacune à une demande de point d'intervalle respective et en outre d'informations de circulation reçues d'un système de notification général, une liste d'itinéraire pour un itinéraire à parcourir conformément aux points d'intervalle, aux indications d'horaire associées et aux informations de circulation,
**caractérisé en ce que**
- les informations de circulation sont des informations de circulation dynamiques (40) qui sont communiquées au véhicule,
- lesdites informations de circulation dynamiques (40) sont communiquées au sous-système informatique de navigation (30) et à la fonctionnalité de planification d'itinéraire (24) pour influencer d'une manière dynamique la planification de l'itinéraire à prendre.

2. Système de navigation selon la revendication 1,
**caractérisé par** ledit système de notification général émettant une ou plusieurs propositions pour acceptation ou refus par un utilisateur.

3. Système de navigation selon la revendication 2,
**caractérisé par** le système de notification général, pendant qu'il émet ladite proposition, donnant la priorité à une proposition qui conserve un calendrier de voyage précédent et vraiment efficace.

4. Système de navigation selon la revendication 3,
**caractérisé en ce qu'**un échec à conserver ledit calendrier efficace déclenche une re-planification totale de l'itinéraire au lieu d'une adaptation partielle.

5. Système de navigation selon la revendication 1,
**caractérisé par** un moyen de reconnaissance de refus pour détecter, après ladite production, un signal de refus ou de modification d'utilisateur, et réactiver ladite fonctionnalité de planification d'itinéraire pour produire sur ce une liste d'itinéraire modifiée.

6. Système de navigation selon la revendication 1,
**caractérisé par** un moyen de signalisation d'échec pour signaler, sous la commande d'un échec par rapport à l'acceptation dudit itinéraire, un signal d'échec et permettre à l'utilisateur (20) d'entrer une modification.

7. Système de navigation selon la revendication 1,
**caractérisé par** une fonctionnalité de réception vocale pour permettre à une personne utilisatrice d'entrer des signaux de modification et/ou de refus sous forme vocale.

8. Système de navigation selon la revendication 7,
**caractérisé en** ayant en outre un moyen de réception pour recevoir des signalisations de condition externe depuis un système général de signalisation ou de diffusion de longue portée, tel qu'un RDS/TMC ou une radio mobile.

9. Procédé de fonctionnement d'un système de planification d'itinéraire de navigation selon la revendication 1, qui est muni de diverses fonctionnalités interconnectées, comprenant une fonctionnalité I/O d'utilisateur (22), une fonctionnalité de planification d'itinéraire (24), une fonctionnalité de détermination de position (36), un sous-système informatique de navigation (30) pour calculer un itinéraire à prendre et une fonctionnalité de tableau des destinations et des établissements (28, 32), dans lequel ledit procédé comprend les étapes consistant en ce que l'utilisateur entre dans le système un jeu de demandes de points d'intervalle reçues d'un utilisateur (20) et une ou plusieurs indications d'horaire associées chacune à une demande de point d'intervalle respective, et en outre de détection des informations de circulation reçues d'un système de notification général, et en ce que l'utilisateur induit ledit système à produire une liste d'itinéraire pour un itinéraire à parcourir conformément aux points d'intervalle, aux indications d'horaire associées et aux informations de condition de circulation,
**caractérisé en ce que**
- les informations de circulation sont des informations de circulation dynamiques (40) qui sont communiquées au véhicule,
- lesdites informations de circulation dynamiques (40) sont communiquées au sous-système informatique de navigation (30) et à la fonctionnalité de planification d'itinéraire (24) pour influencer d'une manière dynamique la planification de l'itinéraire à prendre.
